(19) Europäisches Patentamt
European Patent Office
Office européen des brevets

(11) **EP 3 661 694 B1**

(12) **EUROPÄISCHE PATENTSCHRIFT**

(45) Veröffentlichungstag und Bekanntmachung des Hinweises auf die Patenterteilung:
**24.05.2023   Patentblatt 2023/21**

(21) Anmeldenummer: **17768112.9**

(22) Anmeldetag: **14.09.2017**

(51) Internationale Patentklassifikation (IPC):
**B23Q 3/155** (2006.01)        **G05B 19/418** (2006.01)

(52) Gemeinsame Patentklassifikation (CPC):
**B23Q 3/15503; G05B 19/4187;** G05B 2219/32276;
Y02P 90/02

(86) Internationale Anmeldenummer:
**PCT/EP2017/073206**

(87) Internationale Veröffentlichungsnummer:
**WO 2019/052649 (21.03.2019 Gazette 2019/12)**

(54) **VERFAHREN UND VORRICHTUNG ZUR RECHNERGESTÜTZTEN OPTIMIERUNG EINER BELEGUNG VON MAGAZINPLÄTZEN MIT WERKZEUGEN INNERHALB MINDESTENS EINES WERKZEUGMAGAZINS FÜR EINE WERKZEUGMASCHINE**

METHOD AND DEVICE FOR COMPUTER-ASSISTED OPTIMISATION OF OCCUPANCY OF MAGAZINE SPACES BY TOOLS WITHIN AT LEAST ONE TOOL MAGAZINE FOR A MACHINE TOOL

PROCÉDÉ ET DISPOSITIF POUR L'OPTIMISATION ASSISTÉE PAR ORDINATEUR D'UNE OCCUPATION D'EMPLACEMENTS DE MAGASIN PAR DES OUTILS DANS AU MOINS UN MAGASIN D'OUTILS POUR UNE MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.06.2020   Patentblatt 2020/24**

(73) Patentinhaber: **Siemens Aktiengesellschaft 80333 München (DE)**

(72) Erfinder: **ROYER, Christian 85521 Ottobrunn (DE)**

(74) Vertreter: **Siemens Patent Attorneys Postfach 22 16 34 80506 München (DE)**

(56) Entgegenhaltungen:
**EP-A1- 2 140 969        DE-A1-102011 076 565 DE-A1-102012 111 230    DE-A1-102015 206 741 JP-A- 2005 324 262**

EP 3 661 694 B1

**Beschreibung**

Die Erfindung betrifft ein Verfahren und eine Vorrichtung Verfahren zur rechnergestützten Optimierung einer Belegung von Magazinplätzen mit Werkzeugen innerhalb mindestens eines Werkzeugmagazins für eine Werkzeugmaschine.

Eine Werkzeugmaschine ist eine automatisierte Fertigungseinrichtung mit der eine vorgegebene Form an einem Werkstück mittels eines oder mehrerer Werkzeuge erzeugt wird. Mehrere Werkzeuge können einem Werkzeugtyp z.B. Fräsen zugeordnet sein. Ein anderer Werkzeugtyp kann z.B. Bohren sein. Eine Werkzeugmaschine besitzt eine Werkzeugspindel, in der sich das bearbeitende Werkzeug, auch Spindelwerkzeug genannt, bei der Bearbeitung befindet.

Die Werkzeuge, die von der Werkzeugmaschine zur Bearbeitung eines Werkstücks verwendet werden können, sind in einem Werkzeugmagazin abgelegt. Davon gibt es verschiedene Arten. Eine sehr häufig verwendete Form sind Kettenmagazine, die z.B. in der Automobilindustrie zum Einsatz kommen.

Aus DE 10 2012 111 230 A1 ist ein Verfahren zur Steuerung von Werkzeugwechselvorgängen an einer Werkzeugmaschine bekannt, wobei ein Bearbeitungsprozess an einem Werkstück eine Sequenz von Bearbeitungsvorgängen mit jeweils einem bestimmten Werkzeug und jeweils einer bestimmten Zeitdauer umfasst und für einen Werkzeugwechsel Werkzeuge einer Werkzeugspindel durch eine zweite Lagereinrichtung in Kommunikation mit einer ersten Lagereinrichtung bereitgestellt werden. Schwerpunkt von D1 liegt in einer Art optimiertem Vorladen von Werkzeugen in einem Zwischenmagazin, um die Bereitstellungszeit zu verkürzen und damit die Wartezeit zu minimieren.

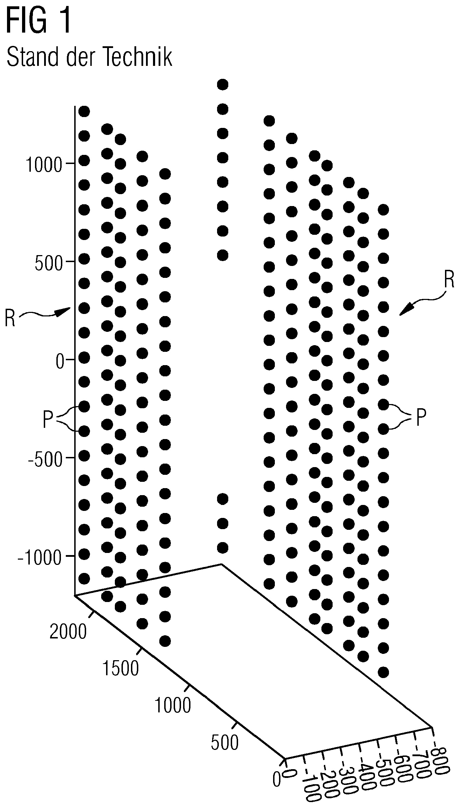

Eine weitere Magazinart sind Regalmagazine R, wie es beispielsweise in Figur 1 angedeutet ist, in denen sehr viele verschiedene Werkzeuge untergebracht werden können (bis zu 500 Werkzeuge oder sogar eventuell noch mehr). Die Werkzeuge sind darin auf festen Magazinplätzen P abgelegt. Ein solches Magazin kann aus einer Hauptseite und einer gegenüberliegenden Gegenseite bestehen.

Das Regalmagazin besitzt eine Vorrichtung insbesondere ein Magazingerät, das in der Figur 1 nicht dargestellt ist, mit der ein Werkzeug auf seinem Magazinplatz P abgelegt und geholt werden kann. Diese Magazinart wird vor allem dann verwendet, wenn eine größere Vielfalt von unterschiedlichen Werkstücken, für die eine Vielzahl an unterschiedlichen Werkzeugen benötigt wird, mit einer Werkzeugmaschine produziert werden soll.

Die Bearbeitung eines Werkstücks eines bestimmten Werkstücktyps erfolgt mit einer vorgegebenen Sequenz von Werkzeugen. Ein Werkzeug kann dabei durchaus mehrmals in dieser Sequenz vorkommen. Die Sequenz ist für alle Werkstücke eines Werkstücktyps z.B. Autositz die gleiche. Die Sequenz kann für Werkstücke eines anderen Werkstücktyps eine andere sein.

Während eines Arbeitsschritts der Bearbeitung eines Werkstücks mit einem Werkzeug der Sequenz, dem Spindelwerkzeug, wird im Regalmagazin das "Vorgängerwerkzeug" des vorhergehenden Arbeitsschritts auf seinen Magazinplatz zurückgefahren bzw. zurückgelegt. Anschließend erfolgt eine Leerfahrt zum Magazinplatz des "Nachfolgerwerkzeugs" des nachfolgenden Arbeitsschrittes. Dieses wird dann aufgenommen und zu einem Bereitstellungsplatz transportiert. Ist der aktuelle Arbeitsschritt, d.h. die Bearbeitung mit dem aktuellen Spindelwerkzeug beendet, so erfolgt ein Austausch des Werkzeugs in der Spindel (z.B. mit einem Werkzeugwechsler). Falls die Bearbeitung mit dem Spindelwerkzeug beendet ist, aber das Nachfolgerwerkzeug für den folgenden Arbeitsschritt noch nicht bereit steht, entsteht eine Wartezeit bei der Spindelversorgung. Diese einzelnen Wartezeiten reduzieren die Maschinen-Effizienz und erhöhen die Produktionsdauer. Deshalb sollen diese Wartezeiten vermieden werden.

Bei der Minimierung der Wartezeiten bei der Spindelversorgung während der Produktion einer vorgegebenen bzw. vorgebbaren Menge von Werkstücken eines oder mehrerer Werkstücktypen sind folgenden Restriktionen zu beachten:

Ein Werkzeug darf gewöhnlich nicht an jeden Magazinplatz gestellt werden, d.h. es gibt für das Werkzeug zulässige Magazinplätze und unzulässige Magazinplätze:

- Der Magazinplatztyp des Werkzeugs und der Magazinplatztyp des Magazin bzw. Regalplatzes müssen kompatibel sein. So dürfen z.B. große Werkzeuge nicht auf Magazinplätze für kleine Werkzeuge gestellt werden und ggf. umgekehrt.
- Werkzeuge dürfen am Rand nicht überragen.
- Auf gesperrten Magazinplätzen dürfen keine Werkzeuge stehen.
- Sind Werkzeuge übergroß, so müssen ein oder eventuell sogar mehrere benachbarte Magazinplätze frei gelassen werden.

Die Ausgangssituation ist gewöhnlich ein mit Werkzeugen gefülltes (eventuell auch sehr volles) Regalmagazin. Um die oben genannten Restriktionen beachten zu können, erfolgt eine Umlagerung der Werkzeuge im Regalmagazin. Diese kann nicht hauptzeitparallel (d.h. bei laufender Produktion) durchgeführt werden und bringt somit eine Stillstandzeit der Werkzeugmaschine mit sich. Es ist in diesem Kontext sinnvoll, möglichst viele Werkzeuge wieder auf den alten Magazinplatz zu zuweisen.

Es ist Aufgabe der vorliegenden Erfindung, die Maschineneffizienz und dabei insbesondere die oben genannten Wartezeiten zu optimieren.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren nach Anspruch 1.

Die Bereitstellungdauer kann sich aus einer Hol-Zeitdauer, die die Zeitdauer für das Holen eines Werkzeugs durch das Magazingerät zum Bereitstellungsplatz von je einem für das Werkzeug zulässigen Magazinplatz umfasst, und aus einer Zurückleg-Zeitdauer, die die Zeitdauer für das Zurücklegen eines Werkzeugs durch das Magazingerät vom Bereitstellungsplatz zu je einem für das Werkzeug zulässigen Magazinplatz umfasst, und aus einer Leerfahrt-Zeitdauer für eine Leerfahrt des Magazingeräts von einem ersten Magazinplatz zu einem anderen zweiten Magazinplatz zusammensetzen.

Wenn die der folgende Arbeitsschritt der erste Arbeitsschritt in der Sequenz der Arbeitsschritte ist, dann gibt es keine Zurückleg-Zeitdauer, d.h. sie beträgt Null, und keine Leerfahrt, d.h. die Leerfahrt-Zeitdauer beträgt Null.

Es können alle Magazinplatzpaar-Kombinationen von ersten und zweiten Magazinplätzen berücksichtigt werden. Die Anzahl der Magazinplatzpaar-Kombinationen kann gegebenenfalls dadurch reduziert werden, dass diese in Abhängigkeit der zu verwendenden Werkzeuge nach der Reihenfolge der Arbeitsschritte innerhalb der Sequenz berücksichtigt werden.

Zudem kann eine Menge von Werkstücktypen und Stückzahlen der zu fertigenden Werkstücke jedes Werkstücktyps der Menge erfasst und diese bei der Optimierung der Belegung der Magazinplätze mit Werkzeugen berücksichtigt werden.

Die genannte Optimierung kann mittels gemischt ganzzahlig linearer Optimierung oder mittels einer heuristischen ganzzahligen linearen Optimierung durchgeführt werden, die jeweils in den nachstehenden Ausführungsbeispielen näher erläutert werden.

Die Erfindung sieht folgende Schritte vor:

- Erfassen einer Menge aller Halbplätze,
- Erfassen einer Untermenge von Halbplätzen, die überdeckt werden, wenn jeweils ein Werkzeug auf je einen Magazinplatz liegt, wobei diese Mengen bei der Optimierung der Belegung berücksichtigt werden mit dem Zweck, dass kein Halbplatz von mehreren Werkzeugen überdeckt wird.

Ein Magazinplatz kann ein oder mehrere Halbplätze umfassen. Diese können links, rechts oder oben, unten sich befinden. Dies sind Stellen am jeweiligen Magazinplatz, die durch andere Werkzeuge an benachbarten Magazinplätzen überdeckt werden können.

Eine Weiterbildung der Erfindung sieht vor, dass die Optimierung der Belegung der Magazinplätze mit Werkzeugen derart durchgeführt wird, dass die Anzahl der Magazinplätze, die von anderen Werkzeugen als den Werkzeugen vor der Optimierung belegt werden, möglichst gering ist.

Eine Weiterbildung der Erfindung sieht vor, dass eine Menge von Magazinplätzen erfasst wird, die jeweils mit einem Werkzeug fest belegt sind, welche die Optimierung nicht mit anderen Werkzeugen belegt werden dürfen.

Eine Weiterbildung der Erfindung sieht vor, dass die Optimierung der Belegung der Magazinplätze mit Werkzeugen derart durchgeführt wird, dass die Werkzeuge, für die die genannte Wartezeit den Wert Null annimmt, auf Magazinplätze nahe des Bereitstellungsplatzes platziert werden.

Die Erfindung bringt folgende Vorteile mit sich:
Die Optimierung bringt kürzere Verfahrwege des Magazingeräts eines Regalmagazins mit sich, das letztendlich auch zur Energieeinsparung und längerer Haltbarkeit führt. Es gehen damit auch kürzere Produktionszeiten der Werkzeugmaschinen einher.

Ein weiterer Aspekt der Erfindung sieht eine Steuerungseinrichtung nach Anspruch 9 vor.

Ein weiterer Aspekt der Erfindung ist ein Computerprogramm(-produkt) mit Programmcodemitteln zur Durchführung des Verfahrens nach einem der vorangehenden Verfahrensansprüche, wenn es auf einer Steuerungseinrichtung der oben genannten Art abläuft oder auf einem computerlesbaren Medium gespeichert ist.

Das Computerprogramm bzw. -produkt kann auf einem computerlesbaren Medium gespeichert sein. Das Computerprogramm bzw. - produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Steuerungseinrichtung oder in deren Mitteln integriert sein.

Die Steuerungseinrichtung sowie das Computerprogramm(-produkt) können analog zum oben genannten Verfahren weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

Es zeigen:

Fig. 1 die eingangs erwähnten Plätze in einem Regalmagazin, wobei die Hauptseite rechts und die Gegenseite links angeordnet sind,

Fig. 2 schematisch ein Ablaufdiagramm zum iterativen Verfahren mit einer Startkonfiguration, bei dem das heuristische ganzzahlige lineare Optimierungsverfahren angewandt wird,

Fig. 3, 4 und 5 eine Ausgangsbelegung und optimierte Belegung mit dem gemischt ganzzahlig linearer Optimierungsverfahren.

Ein Spezialfall von Optimierungsmethoden ist die lineare Optimierung. Sie befasst sich mit der Optimierung linearer Zielfunktionen über einer Menge, die durch lineare Gleichungen und Ungleichungen eingeschränkt ist. Sie ist Grundlage der Lösungsverfahren der (gemischt-) ganzzahligen linearen Optimierung. Ein sogenannter Solver (Löser) ist eine Sammelbezeichnung für spezielle mathematische Computerprogramme, die mathematische Probleme numerisch lösen können. Im Zusammenhang mit MILP (mixed integer linear programming bzw. gemischt ganzzahlige lineare Programmierung) können für IP-Programme (ganzzahlige Optimierungsmodelle) Standardsolver wie z.B. CPLEX, Scip, Gurobi, Xpress verwendet werden.

Im Folgenden wird ein Beispiel beschrieben, in dem mittels eines MILP-Modell (Mixed Integer Linear Programming) eine rechnergestützte Optimierung einer Belegung von Magazinplätzen mit Werkzeugen innerhalb mindestens eines Werkzeugmagazins für eine Werkzeugmaschine, wobei ein oder mehrere Werkstücke eines Werkstücktyps mittels einer Belegung der Magazinplätze mit Werkzeugen gefertigt werden können.

In der MILP-Formulierung gelten die folgenden Bezeichnungen:

Indices:

| | |
|---|---|
| $L$ | Menge aller Magazinplätze |
| $T$ | Menge der Werkzeuge |
| $HP$ | Menge aller Halbplätze |
| $HP_{l,t}$ | Menge der Halbplätze, die überdeckt werden, wenn Werkzeug t auf Magazinplatz l liegt |
| $W$ | Menge der Werkstücktypen |
| $Op_w$ | Sequenz von der Werkzeugmaschine durchzuführender Arbeitsschritte (oder Operationen) bei Werkstücktyp w |

$$Op_w = (Op_w^1, ..., Op_w^{n_w})$$

| | |
|---|---|
| $T_l$ | Menge der für Magazinplatz l zulässigen Werkzeuge |

Parameter:

| | |
|---|---|
| quantity, | Zu fertigende Stückzahl von Werkstücktyp w |
| $t_w^i$ | Werkzeug in $Op_w^i$ |
| $prodTime_w^i$ | Dauer von $Op_w^i$ |
| $putTime_{t,l}$ | Zeitdauer für das Zurückbringen bzw. Zurücklegen von Werkzeug t vom Bereitstellungsplatz zum Magazinplatz l |
| $getTime_{t,l}$ | Zeitdauer für das Holen von Werkzeug t vom Magazinplatz l zum Bereitstellungsplatz |
| $moveTime_{l,l'}$ | Zeitdauer für die Leerfahrt vom Magazinplatz l zum Magazinplatz l' |
| $moveTime_l$ | Zeitdauer für die Leerfahrt vom Bereitstellungsplatz zum Magazinplatz l |

Variablen:

$setup_{t,l}$    Zuordnung bzw. Zuweisung von Werkzeug t zu Magazinplatz l

(In diesem Fall nimmt sie den Wert 1 an, anderenfalls den Wert 0)

$covers_{t,h}$    Werkzeug t überdeckt den Halbplatz h (In diesem Fall nimmt sie den Wert 1 an, anderenfalls den Wert 0)

waitingTime$_w^i$    (einzelne) Wartezeit, die bei der Fertigung eines Werkstücks von Werkstücktyp w nach Operation i entsteht

QIP-Formulierung (Quadratische IP-Formulierung):

Minimierungszielfunktion:

$$\sum_{w \in W} \sum_{i=1}^{n_w} \text{quantity}_w \text{waitingTime}_w^i$$

Nebenbedingungen:

(1) Jedes Werkzeug muss auf einem Magazinplatz liegen.

$$\sum_{l \in L} \text{setup}_{t,l} = 1 \qquad t \in T$$

(2) Auf einem Magazinplatz darf höchstens ein Werkzeug liegen.

$$\sum_{t \in T} \text{setup}_{t,l} \leq 1 \qquad l \in L$$

(3) Auf einem Magazinplatz darf kein für diesen Magazinplatz unzulässiges Werkzeug liegen.

$$\sum_{t \in T \backslash T^l} \text{setup}_{t,l} = 0 \qquad l \in L$$

(4) Ein Halbplatz darf höchstens von einem Werkzeug überdeckt werden.

$$\sum_{t \in T} \text{covers}_{t,h} \leq 1 \qquad h \in H$$

(5) Liegt ein Werkzeug auf einem Platz, so überdeckt es die entsprechenden Halbplätze

$$\sum_{h \in HP_{l,t}} \text{covers}_{t,h} \geq \text{setup}_{t,l} |HP_{l,t}| \qquad h \in H$$

(6) Es entsteht eine Wartezeit, wenn die Operation Op$_w^i$ kürzer ist, als die Zeitdauer, die das Magazin für das Zurücklegen des vorherigen Werkzeugs, welches für die vorhergehende Operation verwendet wird, die Zwischen- bzw. Leerfahrt zum nächsten Werkzeug und das Holen des nächsten Werkzeugs, welches für die nachfolgende Operation, benötigt.

Für alle $l \in L, l' \in L, w \in W, i = 2, \dots ,n_w$ - 1 gilt:

$$\text{waitingTime}_{w}^{i}$$
$$\geq \sum_{l \in L} \text{putTime}_{t,l} \, \text{setup}_{t_w^{i-1},l} + \sum_{l' \in L} \text{getTime}_{t,l'} \, \text{setup}_{t_w^{i+1},l'}$$
$$+ \sum_{l \in L} \sum_{l' \in L} \text{moveTime}_{l,l'} \, \text{setup}_{t_w^{i},l} \, \text{setup}_{t_w^{i},l'} \quad - \text{prodTime}_{w}^{i}$$

Es entsteht eine Wartezeit nach der ersten Operation, wenn die Leerfahrt vom Bereitstellungsplatz zum Magazinplatz des Werkzeugs für die folgende zweite Operation länger als die erste Operation dauert.

Für i = 1 gilt für alle *l ∈ L, w ∈ W*:

$$\text{waitingTime}_{w}^{1} \geq \sum_{l \in L} \text{getTime}_{t,l} \, \text{setup}_{t_w^{2},l} + \sum_{l \in L} \text{moveTime}_{l} \, \text{setup}_{t_w^{2},l} \quad - \text{prodTime}_{w}^{1}$$

(7) Variablenrestriktionen,

$$\text{setup}_{t,l} \in \{0,1\} \, t \in T, l \in L$$
$$\text{covers}_{t,h} \in \{0,1\} \, t \in T, \, h \in HP$$

$$waitingTime_{w}^{i} \geq 0 \quad _{w \in W, i = 1, \dots, n_w}$$

MILP-Reformulierung:

Da das Testproblem mit 250 Plätzen, 60 Werkzeugen und 20 Operationen mit der QIP-Formulierung nicht lösbar ist. Deshalb wird das QIP als MILP formuliert:
Zusätzliche Variablen:
$h_{w,i,l,l'}$ Hilfsvariable, die den Wert 1 annimmt, falls $t^{i-1}_w$ auf Platz l und $t^{i+1}_w$ auf Magazinplatz l' liegen und damit eine leere Zwischenfahrt von l nach l' erforderlich ist.

Geänderte Restriktionen:

Die Restriktionen (6) werden durch die Restriktionen (9) ersetzt.

(8) Befinden sich die Werkzeuge $t^{i-1}_w$ auf Magazinplatz l und $t^{i+1}_w$ auf Magazinplatz l', dann ist $h_{w,i,l,l'}$ = 1

$$\text{setup}_{t_w^{i-1},l} + \text{setup}_{t_w^{i+1},l'} \leq h_{w,i,l,l'} + 1 \quad w \in W, l \in L, l' \in L, i = 1, \dots, n_w$$

(9) Falls $h_{w,i,l,l'}$ = 1 erfolgt eine leere Zwischenfahrt von l nach l'.

Für alle *l ∈ L, l' ∈ L, w ∈ W, i = 2, … , $n_w$ - 1* gilt:

$$\text{waitingTime}_{w}^{i}$$
$$\geq \sum_{l \in L} \text{putTime}_{t,l} \, \text{setup}_{t_w^{i-1},l} + \sum_{l' \in L} \text{getTime}_{t,l'} \, \text{setup}_{t_w^{i+1},l'}$$
$$+ \sum_{l \in L} \sum_{l' \in L} \text{moveTime}_{l,l'} \, h_{w,i,l,l'}$$
$$- \text{prodTime}_{w}^{i}$$

Für i = 1 gilt weiterhin für alle *l ∈ L, w ∈ W*:

$$\text{waitingTime}_{w}^{1} \geq \sum_{l \in L} \text{getTime}_{t,l} \, \text{setup}_{t_w^{2},l} + \sum_{l \in L} \text{moveTime}_{l} \, \text{setup}_{t_w^{2},l} \quad - \text{prodTime}_{w}^{1}$$

Befinden sich das Werkzeuge $t^{i-1}{}_w$ nicht auf Magazinplatz I oder $t^{i+1}{}_w$ nicht auf Magazinplatz I', so sorgt die Minimierungszielfunktion dafür, dass h $_{w,i,l,l'}$ = 0 gilt.

Performanz-Maßnahmen:

Um die Laufzeit, auch Performanz genannt, zu senken, sind die folgenden weiteren Performanz-Maßnahmen sinnvoll.

Betrachtung ausschließlich kritischer Operationen:

Die maximale Zeitdauer eines Zyklus (Zurückbringen bzw. Zurücklegen, Zwischenfahrt und (Ab)holen) lässt sich berechnen. Man kann sich in (9) deshalb nur auf die Operationen beschränken, die eine kleinere Produktionszeit als die maximale Zyklusdauer aufweisen. Diese Operationen werden als kritisch bezeichnet. Als kritische Werkzeuge werden diejenigen Werkzeuge bezeichnet, die während kritischer Operationen im Regalmagazin zurückgebracht oder geholt werden müssen.

Einschränkung des Lösungsraums:

In Abhängigkeit der Anzahl kritischer Werkzeuge lässt sich der Lösungsraum für die möglichen Magazinplätze der kritischen Werkzeuge einschränken, da die Dauer für das Zurückbringen und das Holen der Werkzeuge mit größerem Abstand zum Bereitstellungsplatz zunimmt.

Die Fahrtdauern zur Gegenseite des Regalmagazins sind extrem lang. Sind nur wenige Werkzeuge kritisch, so kann z.B. auf die komplette Gegenseite als potentielle Magazinplätze für die kritischen Werkzeuge verzichtet werden.

Zusätzliche Restriktionen (Cuts):

$$\mathrm{setup}_{t_w^{i-1},l} \geq \sum_{l' \in L} \mathrm{h}_{w,i,l,l'} \quad w \in W, l \in L, i = 2, \dots, n_w - 2$$

$$\mathrm{setup}_{t_w^{i+1},l'} \geq \sum_{l \in L} \mathrm{h}_{w,i,l,l'} \quad w \in W, l' \in L, i = 2, \dots, n_w - 2$$

Lower Bounds (untere Schranken):

Es lassen sich minimale Zyklenzeiten ermitteln, die abzüglich der Produktionszeit eine untere Schranke für die Wartezeit liefern.

$$\mathrm{waitingTime}_w^i \geq \mathrm{lb}_w^i \quad w \in W, i = 1, \dots, n_w - 2$$

Erweiterungen:

Durch eine Zielfunktion, die sich aus mehreren gewichteten Komponenten zusammensetzt, lassen sich weitere Zielkriterien mit optimieren. Demnach wird eine Start-Werkzeugmagazinplatzbelegung erfasst und die Maximierung der Anzahl der übereinstimmenden Belegungen der Start-Belegung und der optimierten Belegung gilt als zweites weniger hoch gewichtetes Zielkriterium. Das Hauptkriterium bleibt die Minimierung der Wartezeit.

Bevorzugung alter Magazinplätze:

Die von der Optimierung berechnete neue Belegung der Magazinplätze mit Werkzeugen muss physikalisch in der Werkzeugmaschine durch Umrüstungen erzeugt werden. In dieser Zeit steht die Werkzeugmaschine voraussichtlich still. Es ist deshalb günstig, wenn ein Werkzeuge t durch die Optimierung möglichst auf dem alten Magazinplatz $l^{old}{}_t$ landet und deshalb die Anzahl solcher Werkzeuge maximiert wird:

$$\sum_{t \in T} \text{setup}_{t,l_t^{old}}$$

Umplatzierte Werkzeuge nahe am Bereitstellungsplatz ablegen:

Zusätzlich kann es aus optischen Gründen und auch aus Performance-Gründen sinnvoll sein, wenn mit einer sehr niedrigen Gewichtung die umplatzierten, nicht kritischen, Werkzeuge nahe am Bereitstellungsplatz landen und deshalb die Summe der zeitlichen Abstände der Werkzeuge zum Bereitstellungsplatz minimiert wird.

$$\sum_{l \in L} \sum_{t \in T} \text{getTime}_{t,l} \, \text{setup}_{t,l}$$

Festgerüstete Werkzeuge:

Für eine Menge FixedSetups von Paaren (t,$l_t$) mit t E T und $l_t$ E L wird gesetzt:

$$\text{setup}_{t,l_t} = 1$$

MILP-Heuristik:

Für große Probleminstanzen ist die Performanz nicht ausreichend und es wird dafür folgende auf MILP basierende Heuristik zur Minimierung der Wartezeiten für einen Werkstücktypen vorgeschlagen:
Für eine Menge FixedSetup von Werkzeug-Magazinplatz-Paaren und eine Menge OpSubset von Operationen (w,i) sei MILP(FixedSetup, OpSubset) das MILP (siehe oben) mit zusätzlich festgerüsteten Werkzeugen gemäß der Menge FixedSetup und einer Einschränkung der Restriktion (9) auf die Operationen der Menge OpSubset, d.h. nur die Wartezeiten der Operationen aus OpSubset werden minimiert.

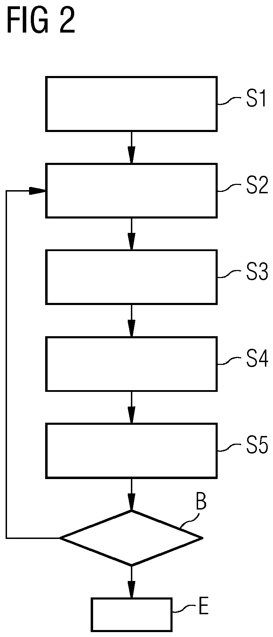

Gemäß Figur 2 wird iterativ wie folgt vorgegangen:

Nach Schritt S1 (Start) wird von einer Sequenz bzw. Liste (Set) von Operationen bzw. Arbeitsschritten (ListOp) aufsteigend sortiert nach der Produktionszeit ausgegangen, wobei ListOp alle Arbeitsschritte umfasst, die zur Herstellung des Werkstücktyps notwendig sind, außer dem ersten und letzten Arbeitsschritt (die Reihenfolge der Arbeitsschritte dieser sortierten Liste entspricht gewöhnlich nicht mehr der Reihenfolge der Arbeitsschritte innerhalb der Sequenz, so wie sie mit der Werkzeugmaschine abgearbeitet werden.) Eine Menge mit festgerüsteten Werkzeugen und jeweils dazugehörigen Magazinplätzen (FixedSetup) beginnt mit einer leeren Menge. In Schritt S2 wird die erste Operation op1 bzw. durchzuführender Arbeitsschritt aus der Liste ListOP ausgewählt (Operation mit kürzester Bearbeitungsdauer). Für die erste Operation op1 gibt es ein Vorgänger- und Nachfolge-Werkzeugpaar (tp, ts), wobei tp im vorhergehenden Arbeitschritt und ts im nachfolgenden Arbeitsschritt verwendet wird.
Gemäß Schritt S3 umfasst die Menge OpSubset alle Operationen, deren Vorgänger- und Nachfolgewerkzeuge bereits fest gerüstet sind oder gleich den oben genannten tp bzw. ts sind. In Schritt S4 wird eine Optimierung mit einer MILP-Formulierung MILP(FixedSetup, OpSubset) durchgeführt. In Schritt S5 wird Operation op1 aus der Liste ListOP entfernt. Die Werkzeuge tp, ts werden mit den aus der Optimierung resultierenden und zugewiesenen sowie zulässigen Magazinplätzen in die Menge FixedSetup aufgenommen, wobei FixedSetup jeweils Paare aus einem Werkzeug und dem zugehörigen Magazinplatz umfasst. Somit drückt FixedSetup die Belegung der Magazinplätze mit Werkzeugen aus. Nach Erfüllung der Bedingung B wird das Verfahren beendet, das mit E gekennzeichnet ist. Die Werkzeug-Magazinplatz-Zuordnung der MILP-Lösung dieser Iteration stellt dann die Lösung der Heuristik dar. Ansonsten wird es mit Schritt 2 fortgesetzt bzw. wiederholt. Die Bedingung ist erfüllt, wenn ListOP leer ist. Letztendlich soll sich eine optimierte Belegung aus dieser MILP-Heuristik ergeben, die letztendlich zu einer Minimierung der eingangs beschriebenen gesamten Wartezeit führt. Eine einzelne Wartezeit nach einem Arbeitsschritt wird durch den positiven Wert der Differenz zwischen der Zurückleg-Zeitdauer für das Zurücklegen des für den vorhergehenden Arbeitsschritt vorgesehenen Werkzeugs tp, der Leerfahrt-Zeitdauer der Leerfahrt des Magazingeräts vom Magazinplatz des für den vorhergehenden Arbeitsschritt vorgesehenen Werkzeugs ts zum Magazinplatz des für den nachfolgenden Arbeitsschritt vorgesehenen Werkzeugs tp sowie der Hol-Zeitdauer für das Holen des für den nachfolgenden Arbeitsschritt vorgesehenen Werkzeugs ts und der erfassten Zeitdauer des aktuell durchzuführenden Arbeitsschritts ergibt.
Die Heuristik lässt sich auch erweitern auf mehrere Werkstücktypen mit gleichen oder unterschiedlichen Stückzahlen von zu fertigenden Werkstücken je Typ durch eine entsprechende Priorisierung/Umsortierung von ListOp.

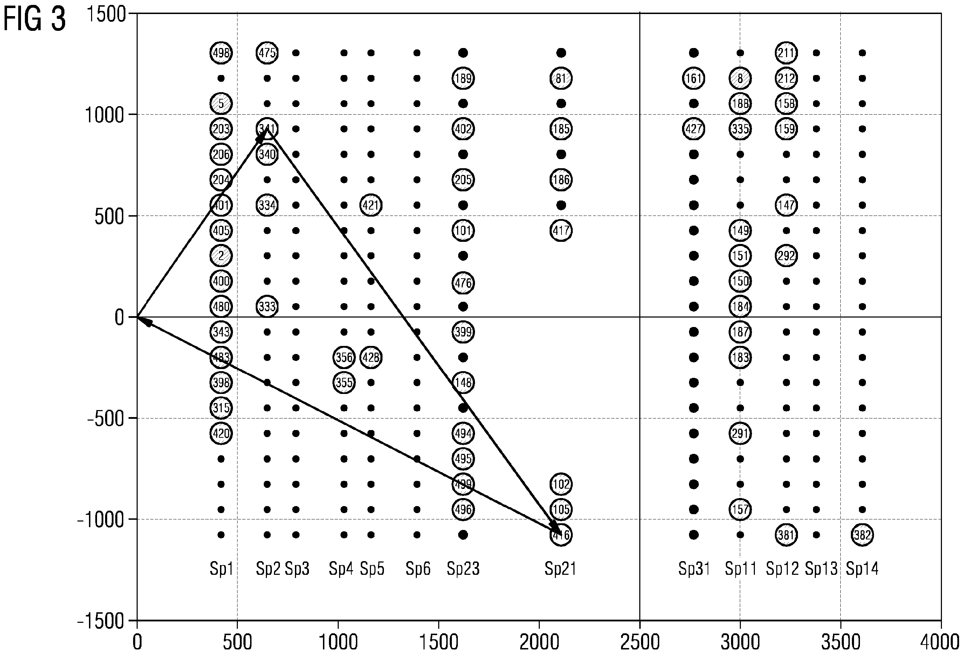

In den folgenden Figuren 3 bis 5 wird ein Regalmagazin mit Anfangsbelegung und optimierter Belegung dargestellt. Der linke Teil der Graphik zeigt maßstabsgetreu die Hauptseite des Regalmagazins R. Die Gegenseite wird auf dem rechten Teil der Graphik ebenfalls maßstabsgetreu dargestellt. Diese Art der zweidimensionalen Darstellung wurde gewählt, da die Verfahrdauer von einem Bereitstellungsplatz im dargestellten Koordinatensystem der Punkt (0,0) zur Gegenseite deutlich länger sind als zur Hauptseite.

In den dort gezeigten Spalten 23, 21 und 31 befinden sich die Magazinplätze für die größeren Werkzeuge. Die Werkzeuge sind mit Nummern versehen.

Die Punkte stellen die Magazinplätze dar, wobei die kleinen Punkte die Magazinplätze sind, auf denen nur kleinere Werkzeuge und die großen Punkte diejenigen Magazinplätze sind, auf denen sowohl kleinere als auch größere Werkzeuge liegen dürfen. Die schraffierten Kreisscheiben stellen die gerüsteten Werkzeuge dar. Die hellen Kreisscheiben stellen die Werkzeuge der Operationen dar.

In dem dargestellten Zyklus in der Figur 3 wird erst das Werkzeug 341 zurückgebracht bzw. zurückgelegt, dann erfolgt eine Leerfahrt zum Magazinplatz des Werkzeugs 416 und es wird das Werkzeug 416 zum Bereitstellungsplatz gebracht.

In der Regel gilt: Je näher die hellen Kreisscheiben am Bereitstellungsplatz liegen und je kürzer die Strecken der Zwischenfahrten sind, desto kürzer sind die Wartezeiten.

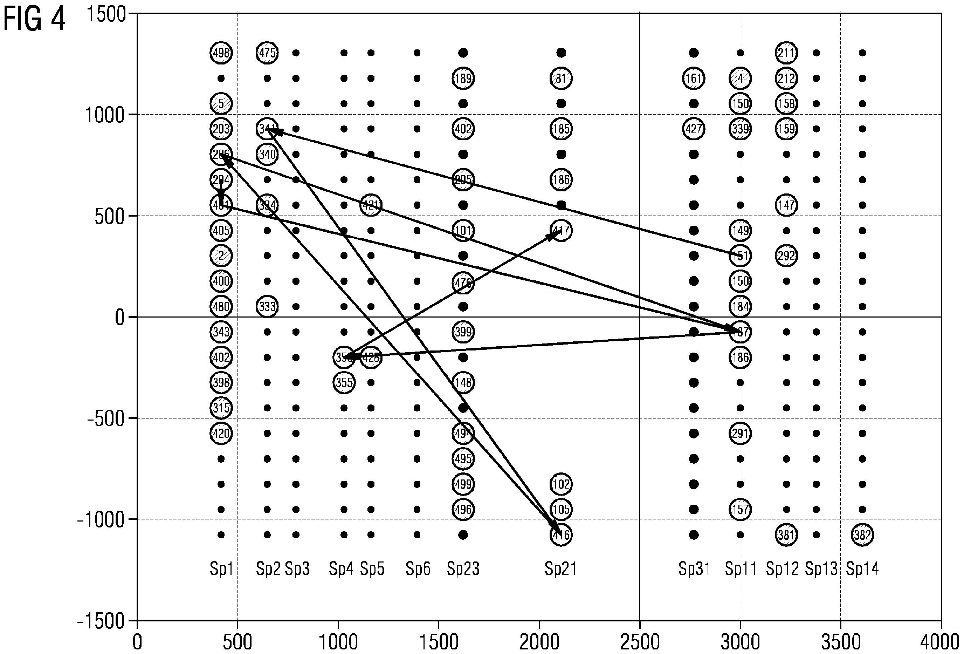

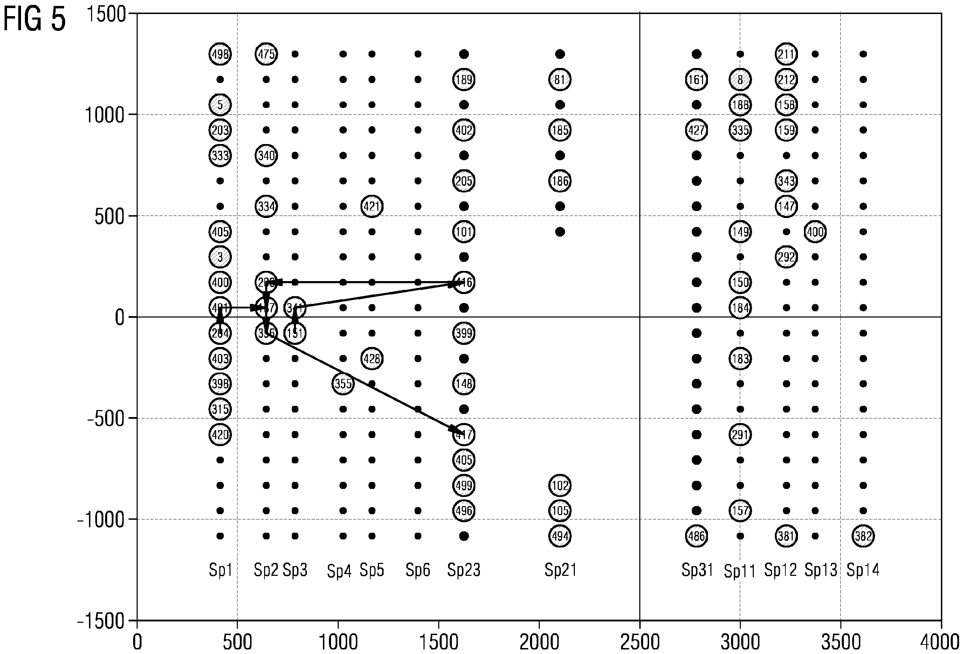

In den folgenden Figuren 4 und 5 sind eine Ausgangsbelegung der Magazinplätze mit Werkzeugen (Figur 4) und die optimierte Belegung (Figur 5) sowie die Leerfahrten, welche mit Linien gekennzeichnet sind, dargestellt. Die Linie von 151 nach 341 bedeutet z.B., dass in einem Zyklus das Werkzeug 151 zurückgebracht werden muss, vom Magazinplatz des Werkzeugs 151 zum Magazinplatz des Werkzeugs 341 eine Leerfahrt erfolgt und das Werkzeug 341 anschließend zum Bereitstellungsplatz gebracht werden muss. Es ist sichtbar, dass in Figur 5 durch die Umplatzierung der Werkzeuge, d.h. neue Belegung der Magazinplätze mit Werkzeugen, kürzere Wege für die Leerfahrten notwendig sind und die Wege zum Abholen und Zurückbringen der Werkzeuge ebenfalls kürzer sind als in Figur 4.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

**Patentansprüche**

1. Verfahren zur rechnergestützten Optimierung einer Belegung von Magazinplätzen (P) mit Werkzeugen innerhalb mindestens eines Werkzeugmagazins (R) für eine Werkzeugmaschine, wobei ein oder mehrere Werkstücke eines Werkstücktyps mit Hilfe der von einem Magazingerät an einem Bereitstellungsplatz bereitgestellten Werkzeuge gefertigt werden,
aufweisend folgende Schritte:

a) Erfassen einer Menge von Magazinplätzen (P) in mindestens einem Werkzeugmagazin (R),
b) Erfassen einer Menge von Werkzeugen (416, 341),
c) Erfassen von zulässigen Werkzeugen pro Magazinplatz,
d) Erfassen einer Sequenz von der Werkzeugmaschine durchzuführender Arbeitsschritte an einem Werkstück, wobei ein für einen Arbeitsschritt der Sequenz vorgesehenes Werkzeug zur Fertigung des Werkstücks verwendet wird,
e) Erfassen von Arbeitsschritt-Zeitdauern, die jeweils zur Durchführung eines einzelnen Arbeitsschritts an dem Werkstück gebraucht wird,
f) Erfassen einer oder mehrerer Bereitstellungszeitdauern abhängig von der Sequenz der durchzuführenden Arbeitsschritte und der Belegung der Magazinplätze, welche jeweils für die Bereitstellung eines Werkzeugs für den folgenden Arbeitsschritt vom Magazingerät am Bereitstellungsplatz gebraucht wird,
g) Optimierung der Belegung der Magazinplätze mit Werkzeugen, so dass die gesamte Wartezeit minimiert wird, wobei sich die gesamte Wartezeit zusammensetzt aus einzelnen Wartezeiten, die sich jeweils aus der Differenz zwischen der erfassten Bereitstellungsdauer und der erfassten Arbeitsschritt-Zeitdauer ergeben, wenn der Wert der Differenz positiv ist, andernfalls die einzelne Wartezeit den Wert Null annimmt, **gekennzeichnet durch** weitere Schritte:

- Erfassen einer Menge aller Halbplätze, wobei die Halbplätze die Stellen sind, die durch andere Werkzeuge an benachbarten Magazinplätzen überdeckt werden können,
- Erfassen einer Untermenge von Halbplätzen, die überdeckt werden, wenn jeweils ein Werkzeug auf je einen Magazinplatz liegt,
- wobei diese Mengen bei der Optimierung der Belegung berücksichtigt werden mit dem Zweck, dass kein Halbplatz von mehreren Werkzeugen überdeckt wird.

2. Verfahren nach dem vorhergehenden Anspruch, **dadurch gekennzeichnet, dass** sich die Bereitstellungsdauer aus einer Hol-Zeitdauer, die die Zeitdauer für das Holen eines Werkzeugs durch das Magazingerät zum Bereitstellungsplatz von je einem für das Werkzeug zulässigen Magazinplatz umfasst, und aus einer Zurückleg-Zeitdauer, die die Zeitdauer für das Zurücklegen eines Werkzeugs durch das Magazingerät vom Bereitstellungsplatz zu je einem für das Werkzeug zulässigen Magazinplatz umfasst, und aus einer Leerfahrt-Zeitdauer für eine Leerfahrt des Magazingeräts von einem ersten Magazinplatz zu einem anderen zweiten Magazinplatz zusammensetzt.

3. Verfahren nach einem der vorhergehenden Ansprüche, **dadurch gekennzeichnet, dass** eine Menge von Werkstücktypen und Stückzahlen der zu fertigenden Werkstücke jedes Werkstücktyps der Menge erfasst und diese bei der Optimierung der Belegung der Magazinplätze mit Werkzeugen berücksichtigt werden.

4. Verfahren nach einem der vorhergehenden Ansprüche, **dadurch gekennzeichnet, dass** die genannte Optimierung mittels gemischt ganzzahliger linearer Optimierung durchgeführt wird.

5. Verfahren nach einem der vorhergehenden Ansprüche, **dadurch gekennzeichnet, dass** die Optimierung der Belegung der Magazinplätze mit Werkzeugen derart durchgeführt wird, dass die Anzahl der Magazinplätze, die von anderen Werkzeugen als den Werkzeugen vor der Optimierung belegt werden, möglichst gering ist.

6. Verfahren nach einem der vorhergehenden Ansprüche, **dadurch gekennzeichnet, dass** eine Menge von Magazinplätzen erfasst wird, die jeweils mit einem Werkzeug fest belegt sind, welche durch die Optimierung nicht mit anderen Werkzeugen belegt werden dürfen.

7. Verfahren nach einem der vorhergehenden Ansprüche, **dadurch gekennzeichnet, dass** die Optimierung der Belegung der Magazinplätze mit Werkzeugen derart durchgeführt wird, dass die die Werkzeuge, für die die genannte Wartezeit den Wert Null annimmt, auf Magazinplätze nahe des Bereitstellungsplatzes platziert werden.

8. Verfahren nach einem der vorhergehenden Ansprüche, **dadurch gekennzeichnet, dass** die Optimierung mittels einer heuristischen gemischt ganzzahligen linearen Optimierung durchgeführt wird.

9. Steuerungseinrichtung zur rechnergestützten Optimierung einer Belegung von Magazinplätzen (P) mit Werkzeugen innerhalb mindestens eines Werkzeugmagazins (R) für eine Werkzeugmaschine, wobei ein oder mehrere Werkstücke eines Werkstücktyps mit Hilfe der von einem Magazingerät an einem Bereitstellungsplatz bereitgestellten Werkzeuge gefertigt werden, aufweisend:

a) Mittel zum Erfassen einer Menge von Magazinplätzen (P) in mindestens einem Werkzeugmagazin (R),
b) Mittel zum Erfassen einer Menge von Werkzeugen (416, 341),
c) Mittel zum Erfassen von zulässigen Werkzeugen pro Magazinplatz,
d) Mittel zum Erfassen einer Sequenz von der Werkzeugmaschine durchzuführender Arbeitsschritte an einem Werkstück, wobei ein für einen Arbeitsschritt der Sequenz vorgesehenes Werkzeug zur Fertigung des Werkstücks verwendet werden kann,
e) Mittel zum Erfassen von Arbeitsschritt-Zeitdauern, die jeweils zur Durchführung eines einzelnen Arbeitsschritts an dem Werkstück gebraucht wird,
f) Mittel zum Erfassen einer oder mehrerer Bereitstellungszeitdauern abhängig von der Sequenz der durchzuführenden Arbeitsschritte und der Belegung der Magazinplätze, welche jeweils für die Bereitstellung eines Werkzeugs für den folgenden Arbeitsschritt vom Magazingerät am Bereitstellungsplatz gebraucht wird, und
g) Mittel zur Optimierung der Belegung der Magazinplätze mit Werkzeugen, so dass im Ergebnis der Optimierung die gesamte Wartezeit minimiert ist, wobei sich die gesamte Wartezeit zusammensetzt aus einzelnen Wartezeiten, die sich jeweils aus der Differenz zwischen der erfassten Bereitstellungsdauer und der erfassten Arbeitsschritt-Zeitdauer ergeben, wenn der Wert der Differenz positiv ist, andernfalls die einzelne Wartezeit den Wert Null annimmt, **gekennzeichnet durch**:

- Mittel zum Erfassen einer Menge aller Halbplätze,
- Mittel zum Erfassen einer Untermenge von Halbplätzen, die überdeckt werden, wenn jeweils ein Werkzeug auf je einen Magazinplatz liegt,
- wobei diese Mengen bei der Optimierung der Belegung berücksichtigt werden können mit dem Zweck, dass kein Halbplatz von mehreren Werkzeugen überdeckt werden kann.

10. Steuerungseinrichtung nach dem vorhergehenden Anspruch, **dadurch gekennzeichnet, dass** sich die Bereitstellungsdauer aus einer Hol-Zeitdauer, die die Zeitdauer für das Holen eines Werkzeugs durch das Magazingerät zum Bereitstellungsplatz von je einem für das Werkzeug zulässigen Magazinplatz umfasst, und aus einer Zurückleg-Zeitdauer, die die Zeitdauer für das Zurücklegen eines Werkzeugs durch das Magazingerät vom Bereitstellungsplatz zu je einem für das Werkzeug zulässigen Magazinplatz umfasst, und aus einer Leerfahrt-Zeitdauer für eine Leerfahrt des Magazingeräts von einem ersten Magazinplatz zu einem anderen zweiten Magazinplatz zusammensetzt.

11. Steuerungseinrichtung nach einem der vorhergehenden Ansprüche, **dadurch gekennzeichnet, dass** die Steuerungseinrichtung zusätzlich Mittel zum Erfassen einer Menge von Werkstücktypen und Stückzahlen der zu fertigenden Werkstücke jedes Werkstücktyps der Menge aufweist, welche bei der Optimierung der Belegung der Magazinplätze mit Werkzeugen berücksichtigt werden können.

12. Computerprogrammprodukt mit Programmcodemitteln zur Durchführung des Verfahrens nach einem der vorangehenden Verfahrensansprüche, wenn es auf einer Steuerungseinrichtung nach einem der vorangehenden Steuerungseinrichtungsansprüche abläuft oder auf einem computerlesbaren Medium gespeichert ist.

**Claims**

1. Method for computer-aided optimization of an occupancy of magazine slots (P) by tools within at least one tool magazine (R) for a machine tool, wherein one or more workpieces of a workpiece type are manufactured by using the tools provided by a magazine device at a supply point, having the following steps:

a) detecting a set of magazine slots (P) in at least one tool magazine (R),
b) detecting a set of tools (416, 341),
c) detecting permissible tools per magazine slot,
d) detecting a sequence of work steps to be performed by the machine tool on a workpiece, wherein a tool envisaged for a work step of the sequence is used to manufacture the workpiece,
e) detecting work step times that are each needed to perform an individual work step on the workpiece,
f) detecting one or more supply times, on the basis of the sequence of work steps to be performed and the occupancy of the magazine slots, that are each needed by the magazine device at the supply point to provide a tool for the next work step,

g) optimizing the occupancy of the magazine slots by tools, so that the overall waiting period is minimized, wherein the overall waiting period is made up of individual waiting periods that each result from the difference between the detected supply time and the detected work step time if the value of the difference is positive, otherwise the individual waiting period assumes the value zero, chatracterized by further steps of:

- detecting a set of all half-slots, the half-slots being the locations that can be covered by other tools in adjacent magazine slots,
- detecting a subset of half-slots covered whenever there is a tool in one magazine slot,
- wherein allowance is made for these sets when optimizing the occupancy, with the aim of no half-slot being covered by multiple tools.

2. Method according to the preceding claim, **characterized in that** the supply time is made up of a fetch time, which comprises the time for the magazine device to fetch a tool to the supply point from one magazine slot permissible for the tool, and of a replace time, which comprises the time for the magazine device to replace a tool from the supply point to one magazine slot permissible for the tool, and of an empty-run time for an empty run by the magazine device from a first magazine slot to another, second magazine slot.

3. Method according to either of the preceding claims, **characterized in that** a set of workpiece types and quantities of the workpieces to be manufactured of each workpiece type of the set is detected and allowance is made for these when optimizing the occupancy of the magazine slots by tools.

4. Method according to one of the preceding claims, **characterized in that** said optimization is performed by means of mixed integer linear optimization.

5. Method according to one of the preceding claims, **characterized in that** the optimization of the occupancy of the magazine slots by tools is performed such that the number of magazine slots occupied by tools other than the tools before the optimization is as low as possible.

6. Method according to one of the preceding claims, **characterized in that** a set of magazine slots that are each permanently occupied by a tool is detected that cannot be occupied by other tools as a result of the optimization.

7. Method according to one of the preceding claims, **characterized in that** the optimization of the occupancy of the magazine slots by tools is performed such that the tools for which said waiting period assumes the value zero are placed in magazine slots close to the supply point.

8. Method according to one of the preceding claims, **characterized in that** the optimization is performed by means of a heuristic mixed integer linear optimization.

9. Control facility for computer-aided optimization of an occupancy of magazine slots (P) by tools within at least one tool magazine (R) for a machine tool, wherein one or more workpieces of a workpiece type are manufactured using the tools provided by a magazine device at a supply point, having:

a) means for detecting a set of magazine slots (P) in at least one tool magazine (R),
b) means for detecting a set of tools (416, 341),
c) means for detecting permissible tools per magazine slot,
d) means for detecting a sequence of work steps to be performed by the machine tool on a workpiece, wherein a tool envisaged for a work step of the sequence can be used to manufacture the workpiece,
e) means for detecting work step times that are each needed to perform an individual work step on the workpiece,
f) means for detecting one or more supply times, on the basis of the sequence of work steps to be performed and the occupancy of the magazine slots, that are each needed by the magazine device at the supply point to provide a tool for the next work step, and
g) means for optimizing the occupancy of the magazine slots by tools, so that the result of the optimization is that the overall waiting period is minimized, wherein the overall waiting period is made up of individual waiting periods that each result from the difference between the detected supply time and the detected work step time if the value of the difference is positive, otherwise the individual waiting period assumes the value zero, **characterized by**:

- means for detecting a set of all half-slots,
- means for detecting a subset of half-slots covered whenever there is a tool in one magazine slot,
- wherein allowance can be made for these sets when optimizing the occupancy, with the aim of no half-slot being able to be covered by multiple tools.

10. Control facility according to the preceding claim, **characterized in that** the supply time is made up of a fetch time, which comprises the time for the magazine device to fetch a tool to the supply point from one magazine slot permissible for the tool, and of a replace time, which comprises the time for the magazine device to replace a tool from the supply point to one magazine slot permissible for the tool, and of an empty-run time for an empty run by the magazine device from a first magazine slot to another, second magazine slot.

11. Control facility according to either of the preceding claims, **characterized in that** the control facility additionally has means for detecting a set of workpiece types and quantities of the workpieces to be manufactured of each workpiece type of the set, allowance being able to be made for these when optimizing the occupancy of the magazine slots by tools.

12. Computer program product having program code means for performing the method according to one of the preceding method claims when said computer program product runs on a control facility according to one of the preceding control facility claims or is stored on a computer-readable medium.

**Revendications**

1. Procédé pour l'optimisation assistée par ordinateur d'une occupation d'emplacements de magasin (P) par des outils à l'intérieur d'au moins un magasin à outils (R) pour une machine-outil, dans lequel une ou plusieurs pièces d'un type de pièce sont fabriquées à l'aide des outils mis à disposition par un appareil de magasin sur un emplacement de mise à disposition,
comprenant les étapes suivantes :

   a) détection d'une quantité d'emplacements de magasin (P) dans au moins un magasin à outils (R),
   b) détection d'une quantité d'outils (416, 341),
   c) détection d'outils autorisés par emplacement de magasin,
   d) détection d'une séquence d'étapes de travail à mettre en oeuvre par la machine-outil sur une pièce, dans lequel un outil prévu pour une étape de travail de la séquence est utilisé pour la fabrication de la pièce,
   e) détection de durées d'étape de travail, lesquelles sont nécessaires respectivement pour la mise en oeuvre d'une étape de travail individuelle sur la pièce,
   f) détection d'une ou de plusieurs durées de mise à disposition en fonction de la séquence des étapes de travail à mettre en oeuvre et de l'occupation des emplacements de magasin, laquelle est nécessaire respectivement pour la mise à disposition d'un outil pour l'étape de travail suivante par l'appareil de magasin sur l'emplacement de mise à disposition,
   g) optimisation de l'occupation des emplacements de magasin par des outils, de telle sorte que le temps d'attente total soit minimisé, dans lequel le temps d'attente total se compose de temps d'attente individuels, lesquels découlent respectivement de la différence entre la durée de mise à disposition détectée et la durée d'étape de travail détectée, lorsque la valeur de la différence est positive, dans le cas contraire le temps d'attente individuel adoptant la valeur zéro, **caractérisé par** des étapes supplémentaires :

      - détection d'une quantité de tous les demi-emplacements,

   dans lequel les demi-emplacements sont les endroits qui peuvent être recouverts par d'autres outils sur des emplacements de magasin voisins,

      - détection d'une sous-quantité de demi-emplacements, lesquels sont recouverts lorsque respectivement un outil se situe sur chaque emplacement de magasin,
      - dans lequel ces quantités sont prises en compte lors de l'optimisation de l'occupation dans le but qu'aucun demi-emplacement ne soit recouvert par plusieurs outils.

2. Procédé selon la revendication précédente, **caractérisé en ce que** la durée de mise à disposition se compose d'une durée de récupération, laquelle comporte la durée pour la récupération d'un outil par l'intermédiaire de l'appareil de magasin jusqu'à l'emplacement de mise à disposition depuis chaque emplacement de magasin autorisé pour l'outil, et d'une durée de replacement, laquelle comporte la durée pour le replacement d'un outil par l'intermédiaire de l'appareil de magasin depuis l'emplacement de mise à disposition jusqu'à chaque emplacement de magasin autorisé pour l'outil, et d'une durée de parcours à vide pour un parcours à vide de l'appareil de magasin depuis un premier emplacement de magasin jusqu'à un autre deuxième emplacement de magasin.

3. Procédé selon l'une des revendications précédentes, **caractérisé en ce qu'**une quantité de types de pièce et des nombres de pièces des pièces à fabriquer de chaque type de pièce de la quantité sont détectés et ceux-ci sont pris en compte lors de l'optimisation de l'occupation des emplacements de magasin par des outils.

4. Procédé selon l'une des revendications précédentes, **caractérisé en ce que** ladite optimisation est mise en oeuvre au moyen d'une optimisation linéaire en nombres entiers mixte.

5. Procédé selon l'une des revendications précédentes, **caractérisé en ce que** l'optimisation de l'occupation des emplacements de magasin par des outils est mise en oeuvre de telle sorte que le nombre des emplacements de magasin qui sont occupés par d'autres outils que les outils avant l'optimisation soit aussi faible que possible.

6. Procédé selon l'une des revendications précédentes, **caractérisé en ce qu'**est détectée une quantité d'emplacements de magasin qui sont occupés de manière fixe respectivement par un outil, lesquels, grâce à l'optimisation, ne peuvent pas être occupés par d'autres outils.

7. Procédé selon l'une des revendications précédentes, **caractérisé en ce que** l'optimisation de l'occupation des emplacements de magasin par des outils est mise en oeuvre de telle sorte que les outils pour lesquels ledit temps d'attente adopte la valeur zéro soient placés sur des emplacements de magasin à proximité de l'emplacement de mise à disposition.

8. Procédé selon l'une des revendications précédentes, **caractérisé en ce que** l'optimisation est mise en oeuvre au moyen d'une optimisation linéaire en nombres entiers mixte heuristique.

9. Dispositif de commande pour l'optimisation assistée par ordinateur d'une occupation d'emplacements de magasin (P) par des outils à l'intérieur d'au moins un magasin à outils (R) pour une machine-outil, dans lequel une ou plusieurs pièces d'un type de pièce sont fabriquées à l'aide des outils mis à disposition par un appareil de magasin sur un emplacement de mise à disposition,
comprenant :

a) des moyens pour la détection d'une quantité d'emplacements de magasin (P) dans au moins un magasin à outils (R),
b) des moyens pour la détection d'une quantité d'outils (416, 341),
c) des moyens pour la détection d'outils autorisés par emplacement de magasin,
d) des moyens pour la détection d'une séquence d'étapes de travail à mettre en oeuvre par la machine-outil sur une pièce, dans lequel un outil prévu pour une étape de travail de la séquence peut être utilisé pour la fabrication de la pièce,
e) des moyens pour la détection de durées d'étape de travail, lesquelles sont nécessaires respectivement pour la mise en oeuvre d'une étape de travail individuelle sur la pièce,
f) des moyens pour la détection d'une ou de plusieurs durées de mise à disposition en fonction de la séquence des étapes de travail à mettre en oeuvre et de l'occupation des emplacements de magasin, laquelle est nécessaire respectivement pour la mise à disposition d'un outil pour l'étape de travail suivante par l'appareil de magasin sur l'emplacement de mise à disposition, et
g) des moyens pour l'optimisation de l'occupation des emplacements de magasin par des outils, de telle sorte qu'en conséquence de l'optimisation le temps d'attente total soit minimisé, dans lequel le temps d'attente total se compose de temps d'attente individuels, lesquels découlent respectivement de la différence entre la durée de mise à disposition détectée et la durée d'étape de travail détectée, lorsque la valeur de la différence est positive, dans le cas contraire le temps d'attente individuel adoptant la valeur zéro, **caractérisé par** :

- des moyens pour la détection d'une quantité de tous les demi-emplacements,
- des moyens pour la détection d'une sous-quantité de demi-emplacements, lesquels sont recouverts lorsque respectivement un outil se situe sur chaque emplacement de magasin,

- dans lequel ces quantités peuvent être prises en compte lors de l'optimisation de l'occupation dans le but qu'aucun demi-emplacement ne puisse être recouvert par plusieurs outils.

10. Dispositif de commande selon la revendication précédente, **caractérisé en ce que** la durée de mise à disposition se compose d'une durée de récupération, laquelle comporte la durée pour la récupération d'un outil par l'intermédiaire de l'appareil de magasin jusqu'à l'emplacement de mise à disposition depuis chaque emplacement de magasin autorisé pour l'outil, et d'une durée de replacement, laquelle comporte la durée pour le replacement d'un outil par l'intermédiaire de l'appareil de magasin depuis l'emplacement de mise à disposition jusqu'à chaque emplacement de magasin autorisé pour l'outil, et d'une durée de parcours à vide pour un parcours à vide de l'appareil de magasin depuis un premier emplacement de magasin jusqu'à un autre deuxième emplacement de magasin.

11. Dispositif de commande selon l'une des revendications précédentes, **caractérisé en ce que** le dispositif de commande comprend en outre des moyens pour la détection d'une quantité de types de pièce et de nombres de pièces des pièces à fabriquer de chaque type de pièce de la quantité, lesquels peuvent être pris en compte lors de l'optimisation de l'occupation des emplacements de magasin par des outils.

12. Produit de programme informatique avec des moyens de code de programme pour la mise en oeuvre du procédé selon l'une des revendications de procédé précédentes, lorsqu'il se déroule sur un dispositif de commande selon l'une des revendications de dispositif de commande précédentes ou qu'il est stocké sur un support lisible par ordinateur.

# FIG 1
Stand der Technik

# FIG 2

FIG 3

FIG 4

FIG 5

EP 3 661 694 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012111230 A1